# EUROPEAN PATENT APPLICATION

(11) **EP 1 998 346 A1**
(43) Date of publication of application: **03.12.2008**
(21) Application number: 07739369.2
(22) Date of filing: 15.03.2007
(51) Int. Cl.: H01G 9/016, H01G 9/058

(54) **ELECTRODE FOR ELECTRIC DOUBLE LAYER CAPACITOR AND ELECTRIC DOUBLE LAYER CAPACITOR**

(30) Priority: 17.03.2006 JP 2006075063
(71) Applicant: JAPAN GORE-TEX, INC., Setagaya-ku Tokyo 156-8505 (JP)
(72) Inventor: NORIEDA, Hiroyuki, Tokyo 156-8505 (JP); KOBAYASHI, Kotaro, Tokyo 156-8505 (JP)
(74) Representative: Shanks, Andrew
(86) International application number: PCT/JP2007/055927
(87) International publication number: WO 2007/108524

(57) **Abstract**

The invention is directed to the provision of an electric double layer capacitor electrode that can fully utilize the electrode performance of a graphite-like carbon material by preventing degradation of the cycle characteristics. More specifically, the invention provides an electric double layer capacitor electrode constructed by laminating a polarizable electrode layer containing a carbon material having graphite-like microcrystalline carbon to at least one side of a sheet-like current collector, wherein the carbon material has a BET specific surface area of 800 m²/g or less as measured by a nitrogen adsorption method, and the sheet-like current collector has interstices on the side that contacts the polarizable electrode layer.

## Description

### TECHNICAL FIELD

The present invention relates to an electric double layer capacitor electrode and an electric double layer capacitor.

### BACKGROUND ART

In recent years, electric double layer capacitors capable of charging and discharging with a large current have been attracting attention as a type of electric power storage device for applications requiring frequent charge/discharge cycles, for example, as auxiliary power supplies for electric vehicles, solar cells, wind power generation, etc. There is therefore a need for an electric double layer capacitor that has high energy density, is capable of fast charging and discharging, and has excellent durability.

An electric double layer capacitor comprises a pair of polarizable electrode layers as an anode and cathode disposed opposite each other with a separator interposed therebetween. Each polarizable electrode layer is impregnated with an aqueous or non-aqueous electrolytic solution, and is united with a current collector. With the aqueous type electrolytic solution, capacitance density can be increased to reduce resistance, but the operating voltage must be set lower than the voltage at which the electrolysis of water takes place. Therefore, from the standpoint of increasing energy density, a non-aqueous type is preferred.

A carbon material having graphite-like microcrystalline carbon (hereinafter called the "graphite-like carbon material") is known for use as a polarizable electrode material for electric double layer capacitors (Japanese Unexamined Patent Publication Nos. H11-317333, 2000-077273, 2000-068164, 2000-068165, 2000-100668, and 2004-289130). This carbon material is prepared by controlling the activation process of the raw material so that the crystallite interlayer spacing (d₀₀₂) of the graphite-like microcrystalline carbon lies within a range of 0.350 to 0.385 nm. Microcrystalline carbon having such a specific interlayer spacing exhibits the property that when a voltage higher than the usual operating voltage (rated voltage) is applied while holding the carbon in contact with an electrolytic solution, electrical activation (electric field activation) occurs with electrolyte ions inserted between the carbon crystal layers, thus producing a high capacitance (electric field activation type capacitor). Once the ions are inserted and fine pores are formed, the graphite-like carbon material retains the high capacitance even after it is repeatedly used at the rated voltage. Compared with activated carbon commonly used as a carbon material for electric double layer capacitors, the graphite-like carbon material can withstand a higher voltage and permits energy density to be increased significantly, and therefore, this carbon material has been attracting attention as a material that can replace activated carbon.

The graphite-like carbon material expands during electric charging due to the insertion of electrolyte ions. As a result, while the graphite-like carbon material exhibits a high capacitance due to the electric field activation, the increase in the capacitance is offset by the decrease in the capacitance per unit volume (capacitance density) associated with the expansion. To prevent such decrease in capacitance density, electric field activation-type capacitors use a cell structure that can suppress the electrode expansion (Japanese Unexamined Patent Publication Nos. 2000-068164 and 2000-068165).

On the other hand, as earlier described, a current collector is attached to each polarizable electrode layer used in the electric double layer capacitor. Generally, for such a current collector, it is known to use a current collector having a poreless structure, but it is also known to use, for example, a current collector having pores formed therethrough in order to improve adhesion to an activated carbon electrode (Japanese Unexamined Patent Publication No. 2005-129924), a porous current collector having a three-dimensional mesh structure in order to provide good contact with a carbon electrode and thereby enhance current collecting efficiency (Japanese Unexamined Patent Publication No. H06-236829), and a mesh-like current collector having numerous microscopic pores formed therein in order to efficiently impregnate an electrolytic solution into an activated carbon electrode (Japanese Unexamined Patent Publication No. H09-251926). However, current collectors having such pores have all been used in combination with activated carbon electrodes, and there have been no examples reported of such current collectors being used in combination with the above-described graphite-like carbon material. The reason is that, in the case of the graphite-like carbon material which expands and shrinks appreciably during charge and discharge, porous current collectors would suffer problems such as deformation of the porous structure or breakage of the mesh structure; furthermore, when expansion suppressing means is provided which applies a large external pressure to the electrode, as earlier described, there is no need in the first place to form the current collector with through-pores or form it in a porous structure in order to improve adhesion or bonding to the electrode. Further, in the case of a capacitor using activated carbon electrodes, since there is hardly any degradation in performance during cycle operation such as described later, using the costly through-pore structure or porous structure has not been worth the cost. Accordingly, in the case of an electric double layer capacitor using the graphite-like carbon material as the polarizable electrode material, a poreless plate or foil, such as an aluminum plate or aluminum foil, is usually used as the electric collector.

### DISCLOSURE OF THE INVENTION

However, in the case of an electric double layer capacitor containing a polarizable electrode material to which a large external pressure is applied in order to suppress the expansion of the graphite-like carbon material during charging, it has been found that if such an electric double layer capacitor is charged and discharged repeatedly, the capacitance decreases and the internal resistance increases (degradation of the cycle characteristics), a problem inherent in the graphite-like carbon material.

Accordingly, it is an object of the present invention to provide an electric double layer capacitor electrode and an electric double layer capacitor that can fully utilize the electrode performance of the graphite-like carbon material by preventing the degradation of the cycle characteristics.

According to the present invention, there is provided
(1) an electric double layer capacitor electrode constructed by laminating a polarizable electrode layer containing a carbon material having graphite-like microcrystalline carbon to at least one side of a sheet-like current collector, wherein
   the carbon material has a BET specific surface area of 800 m²/g or less as measured by a nitrogen adsorption method, and
   the sheet-like current collector has interstices on the side that contacts the polarizable electrode layer.
   According to the present invention, there is also provided
(2) an electric double layer capacitor electrode as described in item (1), wherein the volume of the interstices, per unit area of the sheet-like current collector, is within a range of 0.0002 to 0.008 cm³/cm².
   According to the present invention, there is also provided
(3) an electric double layer capacitor electrode as described in item (1) or (2), wherein the interstices are openings formed in the sheet-like current collector.
   According to the present invention, there is also provided
(4) an electric double layer capacitor electrode as described in item (3), wherein the openings provide an aperture ratio of 10 to 80%.
   According to the present invention, there is also provided
(5) an electric double layer capacitor electrode as described in item (3) or (4), wherein the openings are a plurality of through-pores arranged with substantially uniform spacing.
   According to the present invention, there is also provided
(6) an electric double layer capacitor electrode as described in any one of items (1) to (5), wherein the carbon material having graphite-like microcrystalline carbon has an interlayer spacing d₀₀₂ lying within a range of 0.350 to 0.385 nm as measured by an X-ray diffraction method before charging.
   According to the present invention, there is also provided
(7) an electric double layer capacitor comprising: an electrode as described in any one of items (1) to (6); and means for suppressing expansion of the electrode during charging.
   According to the present invention, there is also provided
(8) an electric double layer capacitor as described in item (7), wherein pressure applied to the electrode during charging is 0.2 MPa or greater.
   According to the present invention, there is also provided
(9) an electric double layer capacitor as described in item (7) or (8), wherein at the end of a cycle test repeated 100 times, a polarizable electrode retains a capacitance density higher than 20 F/cm³, as measured by an energy conversion method, and the retained capacitance density is not lower than 95% of the capacitance density measured at the end of the first cycle, the cycle test being conducted under the following conditions:
   Charge: Constant current, constant voltage method
   Discharge: Constant current method
   Charge/discharge current: 5 mA/cm²
   Charge voltage: Rated voltage
   Charge time: Not shorter than time required to reach rated voltage
   Discharge voltage: 0 V
   Temperature: 25°C

### BRIEF DESCRIPTION OF THE DRAWING

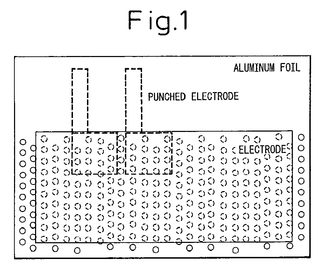

Figure 1 is a simplified top plan view showing a method for die-cutting a polarizable electrode fabricated in a working example.

### BEST MODE FOR CARRYING OUT THE INVENTION

An electric double layer capacitor electrode according to the present invention is constructed by laminating a polarizable electrode layer containing a carbon material having graphite-like microcrystalline carbon to a sheet-like current collector having interstices on a side thereof that contacts the polarizable electrode layer. The present inventors have discovered that when interstices are provided on the side of the sheet-like current collector that contacts the polarizable electrode layer, the cycle characteristics of the electric double layer capacitor improve. This is presumably because the electrolytic solution trapped in the interstices of the sheet-like current collector makes it easier for the electrolytic solution to be supplied into the fine carbon pores formed during the electric field activation, and because after the electric field activation, the interior spaces of the polarizable electrode layer that hold the electrolytic solution shrink with the expansion of the graphite-like carbon material during electric charging, causing the electrolytic solution to be squeezed out of the polarizable electrode layer and trapped in the interstices, and in the subsequent discharge process, the trapped electrolytic solution is supplied back into the polarizable electrode layer. On the other hand, in the case of the conventional poreless plate-like or foil-like current collector, the electrolytic solution is difficult to feed into the fine carbon pores formed during the electric field activation, and beside, after the electric field activation, the graphite-like carbon material expands during electric charging as electrolyte ions are inserted between the carbon crystal layers of the graphite-like carbon material, and the interior spaces of the polarizable electrode layer that hold the electrolytic solution shrink, causing the electrolytic solution held in the interior spaces to be squeezed out of the polarizable electrode layer and to seep out from the periphery of the plate-like or foil-like current collector, as a result of which the electrolytic solution is not sufficiently supplied in the subsequent discharge process into the polarizable electrode layer due to the interference of the current collector, making the polarizable electrode layer locally deficient in electrolytic solution; presumably because of this, the capacitance decreases and the internal resistance increases (the cycle characteristics degrade) as the electric double layer capacitor is charged and discharged repeatedly.

According to the present invention, even when the electric double layer capacitor is charged and discharged repeatedly, the capacitance does not decrease and the increase in the internal resistance is suppressed presumably because the electrolytic solution is sufficiently supplied into the polarizable electrode layer.

In the sheet-like current collector according to the present invention, the interstices capable of trapping the electrolytic solution squeezed out of the polarizable electrode layer during the charging of the electric double layer capacitor are provided on the side that contacts the polarizable electrode layer. In view of the object of the present invention, the volume of such interstices per unit area of the sheet-like current collector is generally within a range of 0.0002 to 0.008 cm³/cm², preferably within a range of 0.0003 to 0.006 cm³/cm², and more preferably within a range of 0.0005 to 0.004 cm³/cm². If the volume of the interstices is smaller than 0.0002 cm³/cm², the electrolytic solution squeezed out of the polarizable electrode layer during the charging cannot be sufficiently trapped. Conversely, if the volume of the interstices is larger than 0.008 cm³/cm², not only does the mechanical strength of the current collector become insufficient, but the electrical conductivity drops, leading to increased internal resistance.

The interstices according to the present invention can be provided by forming projections or depressions on the surface of the sheet-like current collector or by forming openings in the sheet-like current collector. The interstices, whether they be in the form of projections, depressions, or openings, can each be formed in any suitable shape, such as a circular shape, an oval shape, a rectangular shape, a polygonal shape, a diamond shape, a cross shape, a groove-like shape, or a slit-like shape.

When the interstices are openings formed in the sheet-like current collector, the aperture ratio of the openings is within a range of 10 to 80%, preferably within a range of 15 to 70%, and more preferably within a range of 15 to 50%, regardless of their shape. If the aperture ratio of the openings is smaller than 10%, the electrolytic solution squeezed out of the polarizable electrode layer during the charging cannot be sufficiently trapped. Conversely, if the aperture ratio is larger than 80%, not only does the mechanical strength of the current collector become insufficient, but the electrical conductivity drops, leading to increased internal resistance.

The openings formed in the sheet-like current collector are preferably a plurality of through-pores arranged with substantially uniform spacing. The arrangement pattern of the through-pores is not limited to any specific pattern, but a suitable one can be selected from among a checkerboard pattern, a parallel pattern, a random pattern, etc. The pore diameter is preferably within a range of 0.3 to 10 mm, more preferably within a range of 0.5 to 5 mm, and even more preferably within a range of 0.5 to 3 mm. If the pore diameter is smaller than 0.3 mm, the electrolytic solution squeezed out of the polarizable electrode layer during the charging cannot be sufficiently trapped. Conversely, if the pore diameter is larger than 10 mm, not only does the mechanical strength of the current collector become insufficient, but the electrical conductivity drops, leading to increased internal resistance. The pitch of the plurality of through-pores arranged with substantially uniform spacing (the center-to-center pore spacing) is preferably within a range of 1.05 to 5 times the pore diameter, and more preferably within a range o 1.1 to 3 times. If the pitch is smaller than 1.05 times the pore diameter, not only does the mechanical strength of the current collector become insufficient, but the electrical conductivity drops, leading to increased internal resistance. Conversely, if the pitch is larger than 5 times the pore diameter, the electrolytic solution squeezed out of the polarizable electrode layer during the charging cannot be sufficiently trapped.

Any suitable metal that has high electrical conductivity and that does not dissolve or precipitate over the operating voltage range can be used as the material for the sheet-like current collector; for example, various kinds of sheet materials, including a metallic sheet of aluminum, titanium, stainless steel, or the like, and a non-metallic sheet such as a conductive polymer film, a conductive-filler-containing plastic film, or the like, can be used for the current collector. Means for providing interstices in the sheet-like current collector can be suitably selected from among machining means such as punch pressing or embossing, laser processing means, expanding means, mesh forming means, etc., according to the type of the interstices to be formed. The thickness of the sheet-like current collector is preferably within a range of 15 to 100 µm, and more preferably within a range of 20 to 70 µm. If the thickness is smaller than 15 µm, not only does the mechanical strength of the current collector become insufficient, but the amount of heat generation during discharging with a large current increases due to the increased internal resistance. Furthermore, this increases the manufacturing cost of the current collector and is not practical. Conversely, if the thickness is greater than 100 µm, the volume of the current collector increases, leading to a reduction in the energy density of the electric double capacitor.

The specific surface area of the graphite-like carbon material is preferably 800 m²/g or less, more preferably 500 m²/g or less, and particularly preferably 300 m²/g or less. If the specific surface area is larger than 800 m²/g, the number of functional groups existing on the surface of the graphite-like carbon material increases, and when voltage is applied, these functional groups cause electrochemical reactions, significantly degrading the performance of the electric double layer capacitor. Furthermore, impurities such as chemical substances used for activation or cleaning remain in the fine pores, adversely affecting durability. The values of the specific surface area given here were obtained by measuring the adsorption isotherm by a nitrogen adsorption method (pretreatment temperature: 200°C, drying time: 4 hours) using "ASAP 2010" manufactured by Shimadzu Corporation, and by analyzing it by a BET method. Here, when measuring the specific surface area of the graphite-like carbon material after forming the electrode, the electrode is sintered at about 400°C for about two hours to remove the current collector and decompose the binder, thereby separating the graphite-like carbon material. Then, after cleaning the thus obtained graphite-like carbon material with ethanol and then drying, the specific surface area is measured. When the electrode material contains a conductive agent, the specific surface area of the conductive agent must be subtracted from the measured result.

The graphite-like carbon material used for the polarizable electrode layer in the electric double layer capacitor electrode according to the present invention contains microcrystalline carbon. When the interlayer spacing d₀₀₂ of the microcrystalline carbon in the graphite-like carbon material (as measured by an X-ray diffraction method) lies within a specific range, i.e., the range of 0.350 to 0.385 nm, the electrolyte ions can be inserted between the crystal layers of the microcrystalline carbon by applying a voltage higher than the rated voltage, and the material thus exhibits a high capacitance as a polarizable electrode. More preferably, the interlayer spacing d₀₀₂ is in the range of 0.355 to 0.370 nm, because then the increase of capacitance due to the interlayer insertion of the electrolyte ions becomes more pronounced. If Lhe interlayer spacing d₀₀₂ is smaller than 0.350 nm, the interlayer insertion of the electrolyte ions becomes difficult to occur, and the rate of increase of capacitance decreases. Conversely, if the interlayer spacing d₀₀₂ is larger than 0.385 nm, not only does the interlayer insertion of the electrolyte ions become difficult to occur, but the number of functional groups existing on the surface of the graphite-like carbon material increases, and when voltage is applied, these functional groups decompose, significantly degrading the performance of the electric double layer capacitor, which is not desirable. The values of the interlayer spacing d₀₀₂ given here were obtained by measuring powder samples in the air atmosphere by using an X-ray diffractometer "RINT 2500V" manufactured by Rigaku Corporation (X ray: Cu Kα radiation, target: Cu, X-ray output: 50 kV, scan range: 2θ = 2 to 70°C). The values of the interlayer spacing d₀₀₂ were calculated using Bragg's equation 2d sinθ = λ. When measuring the interlayer spacing d₀₀₂ of the graphite-like carbon material after forming the electrode, the measurement is made by separating the graphite-like carbon material as described in the preceding paragraph.

A low-temperature calcined carbon material that is not well activated can be used as the graphite-like carbon material, and the material can be produced using various kinds of materials commonly used as materials for activated carbon, such as plant-based wood, coconut shells, pulp spent liquor, fossil fuels such as coal or petroleum heavy oil, coal or petroleum-based pitch or coke obtained by thermally cracking such fossil fuels, synthetic resins such as phenol resin, furan resin, polyvinyl chloride resin, polyvinylvinylidene chloride resin, etc. Two or more kinds of carbon materials produced using different raw materials and different methods may be mixed in suitable proportions to adjust the performance.

The graphite-like carbon material can be produced by heat-treating it in an inert atmosphere before activation to inhibit the activation from proceeding substantially, or by activating it only briefly. As for the heat treatment, it is preferable to calcine the material at relatively low temperatures of about 600 to 1000°C. For other graphite-like carbon materials advantageous for use in the present invention and the production methods thereof, refer to Japanese Unexamined Patent Publication Nos. H11-317333, 2000-077273, 2000-068164, 2000-068165, 2000-100668, and 2004-289130.

The graphite-like carbon material is contained in the polarizable electrode layer in an amount ranging from 50% to 99% by mass, and more preferably from 65% to 95% by mass, with respect to the combined mass of the graphite-like carbon material and the binder and conductive agent described hereinafter. If the content of the graphite-like carbon material is smaller than 50% by mass, the energy density of the electric double layer capacitor decreases. Conversely, if the content exceeds 99% by mass, the amount of binder becomes insufficient, making it difficult to hold the carbon material within the electrode layer.

Generally, the polarizable electrode layer according to the present invention contains a conductive agent for conferring electrical conductivity to the graphite-like carbon material. Carbon black such as Ketjen black or acetylene black, vapor growth carbon fiber, nanocarbon such as fullerene, carbon nanotube, or carbon nanohorn, or powdered or granular graphite or the like can be used as the conductive agent. The conductive agent should be added preferably in an amount ranging from 1% to 40% by mass, and more preferably in an amount ranging from 3% to 20% by mass, with respect to the combined mass of the conductive agent, the graphite-like carbon material, and the binder. If the amount of the conductive agent added is smaller than 1% by mass, the internal resistance of the electric double layer capacitor increases. Conversely, if the amount added exceeds 40% by mass, the energy density of the electric double layer capacitor decreases.

Generally, the polarizable electrode layer according to the present invention contains a binder for binding the conductive agent to the graphite-like carbon material. A known material such as polytetrafluoroethylene (PTFE), polyvinylidene fluoride (PVDF), polyethylene (PE), polypropylene (PP), styrenebutadiene rubber (SBR), acrylonitrile-butadiene rubber (NBR), etc., can be used as the binder. The binder should be added preferably in an amount ranging from 1% to 30% by mass, and more preferably in an amount ranging from 3% to 20% by mass, with respect to the combined mass of the binder, the graphite-like carbon material, and the conductive agent. If the amount of the binder added is smaller than 1% by mass, it becomes difficult to maintain the carbon material within the electrode layer. Conversely, if the amount added exceeds 30% by mass, the energy density of the electric double layer capacitor decreases, and the internal resistance increases.

The polarizable electrode layer according to the present invention can be fabricated by a sheet forming method or coating method similar to that used for conventional activated carbon. For example, in the case of the sheet forming method, after the particle size of the graphite-like carbon material prepared by the earlier described method has been adjusted so that the mean particle size D50 falls within the range of about 5 to 200 µm, the conductive agent and the binder are added to the carbon material, and the mixture is kneaded and rolled-down into a sheet-like form. When kneading, various liquid agents such as water, ethanol, acetonitrile, etc., may be used singly or mixed together in a suitable combination. The thickness of the polarizable electrode layer is preferably 50 to 1000 µm, and more preferably 60 to 500 µm. If the thickness is smaller than 50 µm, the volume that the current collector occupies in the electric double layer capacitor increases, and the energy density decreases. Conversely, if the thickness exceeds 1000 µm, the internal resistance of the electric double layer capacitor increases. The values of the electrode layer thickness given here were obtained by measuring it using a dial thickness gauge "SM-528" manufactured by Teclock Co., Ltd., without applying any load other than the instrument's spring load.

When combining the polarizable electrode layer with the sheet-like current collector in an integral fashion, if they are simply pressure-bonded together, they can function as intended. However, to reduce the contact resistance between them, the polarizable electrode layer and the sheet-like current collector may be joined together by using a conductive paint as a bonding material, or may be pressure-bonded together after applying a conductive paint over the polarizable electrode layer or the sheet-like current collector and drying it. When joining or pressure-bonding the polarizable electrode layer and the sheet-like current collector together, the necessary interstices must be formed on the side of the sheet-like current collector that contacts the polarizable electrode layer. Provisions must be made, for example, to prevent the openings formed in the sheet-like current collector from being substantially filled with the conductive paint and/or the carbon material of the polarizable electrode layer during joining or pressure-bonding. If the expansion ratio differs between the anode and cathode, the necessary interstices may be formed only on the surface of the sheet-like current collector that contacts the polarizable electrode having the greater expansion ratio. For example, when a conventional quaternary ammonium salt-based electrolytic solution is used, since the cathode has the greater expansion ratio due to the difference in the ion diameter of the electrolyte, the necessary interstices may be formed only on the surface of the sheet-like current collector that contacts the polarizable cathode.

The electric double layer capacitor has a structure in which the pair of polarizable electrodes as the anode and cathode, each comprising a polarizable electrode layer and a sheet-like current collector in an integral fashion, are disposed opposite each other with a separator interposed therebetween. An insulating material, such as microporous paper or glass or a porous plastic film of polyethylene, polypropylene, polyimide, polytetrafluoroethylene, or the like, can be used for the separator. The separator thickness is generally in the range of about 10 to 100 µm. The separator may be formed by laminating two or more insulating layers together.

Since the graphite-like carbon material expands during electric charging, as described above, there is employed a structure in which expansion suppressing means externally applies pressure to the polarizable electrode layer in order to prevent the capacitance density from decreasing. The means for suppressing the expansion during charging can be suitably selected from among various methods such as a method that externally compresses a laminated cell, coin cell, or the like by using flat plates, etc., or a method that places a laminated cell or an electrode winding structure for a wound cell into a rigid container. Since the pressure need only be applied during charging, a gap may exist between the electrode and the expansion limiting member (flat plates, container, or the like) before charging. The pressure to be applied to the polarizable electrode layer during charging is preferably within a range of 0.2 to 30 MPa, and more preferably within a range of 0.3 to 20 MPa. If the applied pressure is smaller than 0.2 MPa, the expansion of the graphite-like carbon material cannot be sufficiently suppressed, resulting in a decrease in capacitance density and an increase in expansion ratio; as a result, the current collector may be deformed or the polarizable electrode layer may delaminate, causing the internal resistance to increase and the durability to drop. Conversely, if the applied pressure is larger than 30 MPa, the interstices in the electrodes may be crushed, increasing the resistance to the diffusion of the electrolytic solution, or the separator may be crushed, increasing the internal resistance or causing short-circuiting. Further, the interstices formed on the side of the sheet-like current collector that contacts the polarizable electrode layer must not be substantially crushed by the pressure applied to suppress the expansion of the graphite-like carbon material. For example, provisions must be made to prevent the openings formed in the sheet-like current collector from being substantially filled with the conductive paint and/or the carbon material of the polarizable electrode layer due to the expansion suppressing pressure. On the other hand, if the electrode expansion is completely suppressed, the electrolyte ions may not be sufficiently inserted between the crystal layers of the graphite-like carbon material, and the effect of increasing the capacitance may be reduced; therefore, it is preferable to set the external pressure so as to allow an expansion of about 3 to 60% to occur.

For the electrolyte in the electrolytic solution, a quaternary ammonium salt, quaternary imidazolium salt, quaternary pyridinium salt, quaternary pyrollidinium salt, quaternary phosphonium salt, etc. can be used singly or in a combination of two or more. For the counter-anions in the electrolyte, BF₄⁻, PF₆⁻, AsF₆⁻, ClO₄⁻, CF₃SO₃⁻, (CF₃SO₂)₂N⁻, AiCl₄⁻, SbF₆⁻, etc. are preferred from the viewpoint of electrochemical stability and molecular ion diameter; among others, BF₄⁻ is particularly preferable.

The electrolyte may be used without dilution if it is a liquid at room temperature, but generally it is preferable to use it in the form of an electrolytic solution by dissolving it in an organic solvent. By using an organic solvent, the viscosity of the electrolytic solution can be reduced to suppress an increase in the internal resistance of the electrode. Examples of the organic solvent used here include carbonates such as ethylene carbonate, propylene carbonate, diethyl carbonate, butylene carbonate, dimethyl carbonate, and vinylene carbonate, lactones such as γ- butyrolactone, nitriles such as acetonitrile, benzonitrilc, and propionitrile, ethers such as 1,2-dimethoxyethane, diethylene glycol dimethyl ether, ethylene oxide, propylene oxide, tetrahydrofuran, 1,2-dimethoxyethane, and 1,3-dioxolane, sulfur-containing compounds such as dimethyl sulfoxide and sulfolane, amides such as formamide, N-methylformamide, N,N-dimethylformamide, N,N-diethylformamide, and N-methyl acetamide, dialkyl ketones such as methylethyl ketone and methyl isobutyl ketone, and other organic solvents such as N-methyl pyrrolidone and nitromethane, from which a suitable one may be selected by considering such factors as the solubility of the electrolyte and the reactivity with the electrode. The above organic solvents may be used singly, or two or more kinds of solvents may be mixed together in a suitable combination. Since it is considered that the electrolyte ions to be inserted between the crystal layers of the graphite-like carbon material during the electric field activation are solvated in the surrounding solvent, it is preferable to use a solvent having a small molecular volume. The electrolyte concentration in the electrolytic solution is preferably 0.5 mol/L or higher, and more preferably 1.0 mol/L or higher. The upper limit of the electrolyte concentration depends on the solubility determined by each specific combination of the electrolyte and organic solvent.

The electric field activation can be performed by applying a voltage higher than the rated voltage and using a relatively small amount of electric current. For the electric field activation method, refer to the prior art method (Japanese Unexamined Patent Publication No. 2000-100668).

### WORKING EXAMPLES

The present invention will be described in detail below with reference to working examples.

### Working example 1

Five hundred grams of a petroleum pitch-based carbon material was milled by a milling machine to produce a powdered material whose D50 was 20 µm, and the powdered material was calcined at 800°C in an inert atmosphere to obtain a carbonized material. Potassium hydroxide whose mass ratio to the carbonized material was 2 was mixed with it, and the mixture was activated by heat treatment at 700°C in an inert atmosphere. After that, the mixture was cooled to room temperature, rinsed with waLer Lo remove alkali content, and then dried. The thus prepared graphite-like carbon material had a BET specific surface area of 100 m²/g, and the interlayer spacing d₀₀₂ of the microcrystalline carbon as measured by an X-ray diffraction method was 0.365 nm. Ethanol was added to a mixture consisting of 85% by mass of the graphite-like carbon material, 5% by mass of Ketjen black powder as a conductive agent ("EC600JD" manufactured by Ketjen Black International Co., Ltd), and 10% by mass of polytetrafluoroethylene powder as a binder ("TEFLON (registered trademark) 6J" manufactured by Mitsui DuPont Fluorochemicals Co., Ltd.), and the resulting mixture was kneaded and then paste extruded to obtain a tape. The tape was then rolled-down three times into the form of a sheet and dried at 150°C for one hour to remove the ethanol to obtain a polarizable sheet of a width of 100 mm and a thickness of 200 µm. A punched aluminum foil (pore diameter: 1 mm, pitch: 2 mm, aperture ratio: 23%, interstice volume: 0.0012 cm³/cm², arrangement pattern: 60° checkerboard pattern, no punching in 60-mm lead portion) produced by punching a plain aluminum foil of a width of 160 mm and a thickness of 50 µm ("AlN30H-H18" manufactured by Showa Denko K.K.) was used as the current collector, and a conductive adhesive liquid ("GA-37" manufactured by Hitachi Powdered Metals Co., Ltd.) was applied over one surface of the current collector by a brush so as not to completely fill the pores (amount of applied adhesive: 1.0 g/m² with dispersion medium dried with no electrode attached); then, the polarizable sheet was placed over one edge portion of the aluminum foil, and they were pressure-bonded together by passing them through compression rolls, to obtain an aluminum-laminated electrode with their contacting faces bonded together. The aluminum-laminated electrode was then placed in an oven whose temperature was controlled to 150°C, and the electrode was held therein for 10 minutes to remove the dispersion medium by evaporation from the conductive adhesive liquid layer, thereby obtaining a polarizable electrode.

Next, the aluminum-laminated electrode was diecut to form a rectangular-shaped polarizable electrode with its carbon electrode portion measuring 2 cm square and its lead portion (the portion where the current collector is not covered with the polarizable electrode) measuring 1 x 5 cm, as shown in Figure 1. Two such polarizable electrodes were set up as an anode and a cathode, respectively, and an 80-µm thick, 3-cm square hydrophilized expanded porous polytetrafluorethylene sheet ("BSP0708070-2" manufactured by Japan Gore-Tex Inc.) was inserted as a separator between them; then, the electrodes and the separator were placed between two aluminum-laminated sheets ("PET12/A120/PET12/CPP30 dry laminated sheets manufactured by Showa Denko Packaging Co., Ltd.), and three sides including the lead portion side were heat-sealed to produce an aluminum pack cell. Next, the aluminum pack cell was vacuum dried at 160°C for 48 hours, after which the cell was introduced into a glove box where a dew point of -60°C or less was maintained in an argon atmosphere. Then, 4mL of a propylene carbonate solution containing 1.5 mol/L of triethylmethylammonium tetrafluoroborate was injected as the electrolytic solution into the aluminum pack cell, and the aluminum pack cell was left stationary at a reduced pressure of -0.05 MPa for 10 minutes, allowing the gasses contained in the electrodes to be replaced with the electrolytic solution. Finally, the open end of the aluminum pack cell was sealed by heating, to produce a single laminated type electric double layer capacitor. This electric double layer capacitor was stored at 40°C for 24 hours, thus aging the electrolytic solution into the electrodes. After that, the capacitor was sandwiched between 5-mm thick SUS plates each measuring 5 × 5 cm, and a compression pressure of 2 MPa was applied from the surface side; this capacitor is designated as the capacitor of Working example 1.

### Working example 2

A capacitor was fabricated in the same manner as in Working example 1, except that the compression pressure by the SUS plates was set to 0.4 MPa.

### Working example 3

A capacitor was fabricated in the same manner as in Working example 1, except that a punched aluminum foil (pore diameter: 5 mm, pitch: 10 mm, aperture ratio: 23%, interstice volume: 0.0012 cm³/cm², arrangement pattern: 60° checkerboard pattern, no punching in lead portion) was used as the current collector. Working example 4

A capacitor was fabricated in the same manner as in Working example 1, except that a punched aluminum foil (pore diameter: 1 mm, pitch: 1.5 mm, aperture ratio: 40%, interstice volume: 0.002 cm³/cm², arrangement pattern: 60° checkerboard pattern, no punching in lead portion) was used as the current collector.

### Comparative example 1

A capacitor was fabricated in the same manner as in Working example 1, except that an etched aluminum foil of a thickness of 50 µm ("C512" manufactured by KDK Corporation) was used as the current collector.

### Comparative example 2

A capacitor was fabricated in the same manner as in Working example 1, except that an etched aluminum foil of a thickness of 50 µm ("C512" manufactured by KDK Corporation) was used as the current collector and that the compression pressure was set to 0.4 MPa.

### Comparative example 3

A capacitor was fabricated in the same manner as in Working example 1, except that the compression pressure was set to 0.05 MPa.

### Comparative example 4

A capacitor was fabricated in the same manner as in Working example 1, except that a punched aluminum foil of a thickness of 30 µm (pore diameter: 0.1 mm, pitch: 0.4 mm, aperture ratio: 4.8%, interstice volume: 0.0001 cm³/cm², arrangement pattern: 60° checkerboard pattern, no punching in lead portion) was used as the current collector.

### Comparative example 5

A capacitor was fabricated in the same manner as in Working example 1, except that steam-activated carbon made from coconut shell (specific surface area: 1700 m²/g) was used as the carbon material.

### Comparative example 6

A capacitor was fabricated in the same manner as in Comparative example 1, except that steam-activated carbon made from coconut shell (specific surface area: 1700 m²/g) was used as the carbon material.

The capacitor cells of Working examples 1 to 4 and Comparative examples 1 to 6 fabricated as described above were tested under the following conditions, and the capacitance density, internal resistance, capacitance retention ratio, and expansion ratio were measured on each sample at the end of the 100th cycle; further, the electrodes were inspected after completion of the test. For Comparative examples 5 and 6, electric field activation was not performed because the carbon material used was activated carbon.

Conditions for the first cycle of electric field activation and cycle test

### (Electric field activation)

Charge: 1 mA/cm², 3.5 V, 21600 seconds
Discharge: 1 mA/cm², 0 V
Temperature: 25°C

### (Cycle test)

Charge: 5 mA/cm², 3.0 V, 1000 seconds
Discharge: 5 mA/cm², 0 V
Temperature: 25°C

### (Capacitance density)

The capacitance at the end of the 100th cycle was obtained by an energy conversion method, and the capacitance density was calculated by dividing the obtained value by the volume of the anode and cathode carbon electrode portions, excluding the current collectors, after the expansion.

### (Internal resistance)

In the discharge curve at the 100th cycle, the range corresponding to 10% of the total time from the start of the discharge to the end of the discharge was approximated by a straight line to calculate the internal resistance.

### (Capacitance retention ratio)

The capacitance density retained at the end of the 100th cycle was measured and expressed as a percentage of the capacitance density measured at the end of the first cycle after the electric field activation.

### (Expansion ratio)

After completion of the test, the compression pressure was released and the outer thickness of the aluminum pack was measured and compared with the outer thickness measured before the test.

### (Electrode inspection after completion of test)

After completion of the test, the cell was disassembled to inspect the electrode/collector interface for any change.

### (Equipment)

Charge/discharge test equipment: "CDT-5R2-4" manufactured by Power Systems Co., Ltd.

Analysis software: "CDT Utility Ver. 2.02" produced by Power Systems Co., Ltd.

**Table 1**

| | Capacitance density [F/cm³] | Internal resistance [Ohms] | Capacitance retention ratio [%] | Expansion ratio [%] | Change after completion of test |
|---|---|---|---|---|---|
| Working example 1 | 26.6 | 3.1 | 99 | 20 | No change |
| Working example 2 | 23.7 | 3.0 | 97 | 35 | No change |
| Working example 3 | 26.6 | 3.2 | 98 | 20 | No change |
| Working example 4 | 26.6 | 3.1 | 99 | 20 | No change |
| Comparative example 1 | 18 | 6.6 | 52 | 20 | No change |
| Comparative example 2 | 16.4 | 5.2 | 69 | 35 | No change |
| Comparative example 3 | 15.3 | 3.7 | 97 | 50 | Portion of electrode delaminated |
| Comparative example 4 | 20 | 4.6 | 80 | 20 | No change |
| Comparative example 5 | 15 | 2.6 | 98 | 0 | No change |
| Comparative example 6 | 15 | 3.0 | 98 | 0 | No change |

As can be seen from the results of Table 1, the capacitors having the electric double layer capacitor electrodes according to the present invention (Working examples 1 to 4) have excellent cycle characteristics by retaining high capacitance density and low internal resistance despite the application of strong pressure for suppressing the electrode expansion during charging. In Comparative examples 1 and 2, the expansion ratios were the same as those of Working examples 1 and 2, but because of lack of interstices in the current collectors, the capacitance density decreased and the internal resistance increased. In Comparative example 3, despite the presence of interstices in the current collectors, the expansion ratio increased because of insufficient compression pressure, and as a result, the capacitance density decreased; furthermore, because of the increased change in volume between expansion and shrinkage, a portion of the electrode delaminated. In Comparative example 4, the electrode expansion was suppressed, but because of insufficient interstices, its capacitance density and internal resistance were inferior to those of Working examples 1 to 4.

Comparative example 5 is an example in which an activated carbon electrode was combined with a perforated current collector, but since the activated carbon itself does not involve the problem of cycle characteristic degradation (decrease in capacitance density and increase in internal resistance) as shown in Comparative example 6, "enhancement of the cycle characteristics" is not considered as the purpose of use of the perforated current collector. By comparing Working examples 1 to 4 (23.7 to 26.6 F/cm³) with Comparative examples 1 to 4 (15.3 to 20 F/cm³) in terms of the capacitance density, it can be seen that the inherent high capacitance that the graphite-like carbon material has is fully utilized according to the present invention.

### INDUSTRIAL APPLICABILITY

According to the present invention, since the polarizable electrode layer containing the graphite-like carbon material is used in combination with the sheet-like current collector having interstices on the side thereof contacting the electrode layer, the cycle characteristics of the electric double layer capacitor improve, and the electrode performance of the graphite-like carbon material can be fully utilized.

## Claims

1. An electric double layer capacitor electrode constructed by laminating a polarizable electrode layer containing a carbon material having graphite-like microcrystalline carbon to at least one side of a sheet-like current collector, wherein
said carbon material has a BET specific surface area of 800 m²/g or less as measured by a nitrogen adsorption method, and
said sheeL-like current collector has interstices on the side that contacts said polarizable electrode layer.

2. An electric double layer capacitor electrode as claimed in claim 1, wherein the volume of said interstices, per unit area of said sheet-like current collector, is within a range of 0.0002 to 0.008 cm³/cm².

3. An electric double layer capacitor electrode as claimed in claim 1 or 2, wherein said interstices are openings formed in said sheet-like current collector.

4. An electric double layer capacitor electrode as claimed in claim 3, wherein said openings provide an aperture ratio of 10 to 80%.

5. An electric double layer capacitor electrode as claimed in claim 3 or 4, wherein said openings are a plurality of through-pores arranged with substantially uniform spacing.

6. An electric double layer capacitor electrode as claimed in any one of claims 1 to 5, wherein said carbon material having graphite-like microcrystalline carbon has an interlayer spacing d₀₀₂ lying within a range of 0.350 to 0.385 nm as measured by an X-ray diffraction method before charging.

7. An electric double layer capacitor comprising: an electrode as claimed in any one of claims 1 to 6; and means for suppressing expansion of said electrode during charging.

8. An electric double layer capacitor as claimed in claim 7, wherein pressure applied to said electrode during charging is 0.2 MPa or greater.

9. An electric double layer capacitor as claimed in claim 7 or 8, wherein at the end of a cycle test repeated 100 times, a polarizable electrode retains a capacitance density higher than 20 F/cm³, as measured by an energy conversion method, and said retained capacitance density is not lower than 95% of the capacitance density measured at the end of the first cycle, said cycle test being conducted under the following conditions:
Charge: Constant current, constant voltage method
Discharge: Constant current method
Charge/discharge current: 5 mA/cm²
Charge voltage: Rated voltage
Charge time: Not shorter than time required to reach rated voltage
Discharge voltage: 0 V
Temperature: 25°C
